# EUROPÄISCHE PATENTSCHRIFT

(11) **EP 3 282 352 B1**
(45) Veröffentlichungstag und Bekanntmachung des Hinweises auf die Patenterteilung: **09.09.2020**
(21) Anmeldenummer: 17183199.3
(22) Anmeldetag: 26.07.2017
(51) Int. Cl.: G06F 3/0488, B60K 37/00, G06F 3/0484, B60K 35/00, B60K 37/06

(54) **VERFAHREN UND BEDIENVORRICHTUNG ZUM BEDIENEN EINER EINRICHTUNG**
METHOD AND OPERATING DEVICE FOR OPERATING A DEVICE
PROCÉDÉ ET DISPOSITIF DE COMMANDE PERMETTANT LA COMMANDE D'UN DISPOSITIF

(30) Priorität: 08.08.2016 DE 102016114669
(43) Veröffentlichungstag der Anmeldung: 14.02.2018
(73) Patentinhaber: VOLKSWAGEN AKTIENGESELLSCHAFT, 38440 Wolfsburg (DE)
(72) Erfinder: Perkuhn, Janine, Berlin 10437 (DE); Baumgarten, Jens, 10115 Berlin (DE); Maurer, Lorenz, 10713 Berlin (DE); Eichhorn, Elisabeth, 10115 Berlin (DE); Leuchter, Daniel, 38440 Wolfsburg (DE); Kuhn, Mathias, 14129 Berlin (DE); Frank, Hendrik, 38446 Wolfsburg (DE); Lou, Jian, 10707 Berlin (DE)
(74) Vertreter: Reitstötter Kinzebach

(56) Entgegenhaltungen:
- EP-A1- 2 924 551
- DE-A1-102011 116 187

## Beschreibung

Die vorliegende Erfindung betrifft ein Verfahren zum Bedienen einer Einrichtung, bei dem eine grafische Bedienoberfläche erzeugt und auf einer Anzeigefläche angezeigt wird. Dabei umfasst die Bedienoberfläche zumindest ein Bedienobjekt, das einem Anwendungsprogramm zum Steuern der Einrichtung zugeordnet ist. Durch das Anwendungsprogramm werden Ausgabedaten erzeugt und im Bereich des zugeordneten Bedienobjekts angezeigt, wobei das Anwendungsprogramm eine Funktion mit genau zwei aktivierbaren Programmzuständen aufweist. Dabei ist der erste Programmzustand aktiviert und es werden die Ausgabedaten anhand des aktivierten Programmzustands erzeugt. Anhand der grafischen Bedienoberfläche wird eine Eingabegeste erfasst.

Die Erfindung betrifft ferner eine Bedienvorrichtung zum Bedienen einer Einrichtung mit einer Grafikeinheit, durch die Grafikdaten einer grafischen Bedienoberfläche erzeugbar sind. Die Bedienvorrichtung umfasst ferner eine Recheneinheit, durch die ein Anwendungsprogramm zum Steuern der Einrichtung ausführbar ist und Ausgabedaten des Anwendungsprogramms erzeugbar sind. Sie umfasst zudem eine Anzeigeeinheit mit einer Anzeigefläche, auf der die Bedienoberfläche anzeigbar ist, und eine Eingabeeinheit, durch die eine Eingabegeste erfassbar ist. Dabei umfasst die Bedienoberfläche zumindest ein Bedienobjekt, das dem Anwendungsprogramm zugeordnet ist, wobei die Ausgabedaten im Bereich des zugeordneten Bedienobjekts anzeigbar sind. Dabei weist das Anwendungsprogramm eine Funktion mit genau zwei aktivierbaren Programmzuständen auf, nämlich einem ersten und einem zweiten Programmzustand, wobei der erste Programmzustand aktiviert ist. Dabei sind die Ausgabedaten anhand des aktivierten Programmzustands erzeugbar.

In vielen Zusammenhängen, beispielsweise beim Betreiben eines modernen Kraftfahrzeugs, werden Nutzer mit einer Vielzahl elektronischer Einrichtungen konfrontiert, deren Bedienung ermöglicht werden muss. Zu diesen Einrichtungen gehören beispielsweise Systeme zur Wiedergabe von Medieninhalten, Einrichtungen zum Telefonieren, Navigationssysteme, Datenbanken zum Zugriff auf verschiedene Informationen sowie andere Einrichtungen für verschiedene Aufgaben. Um diese Einrichtungen bedienen zu können, werden vielfach Multifunktionsbediensysteme eingesetzt, welche eine oder mehrere Multifunktionsanzeigen und Bedienelemente umfassen, mit denen die Einrichtungen bedient werden können. Die Bedienung wird dabei durch die auf der Multifunktionsanzeige wiedergegebene Information unterstützt beziehungsweise geführt. Ferner kann über das Bediensystem ausgewählt werden, welche Informationen ausgegeben werden sollen.

Zu den Randbedingungen bei der Gestaltung von Bedienkonzepten gehört die aus verschiedenen Gründen begrenzte Fläche, die für Anzeigen zur Verfügung steht. Dies erfordert eine effiziente Nutzung von Anzeigeflächen, wobei gleichzeitig eine möglichst einfache und übersichtliche Bedienung ermöglicht werden soll.

Die DE 10 2004 029 203 A1 beschreibt eine Bedienvorrichtung für ein Kraftfahrzeug, wobei auf einem Touchscreen ein Bedienfeld darstellbar ist und ein kontinuierlich oder quasi-kontinuierlich veränderbarerer Parameter durch ein Streichen über das Bedienfeld veränderbar ist.

Bei der in der EP 2 838 004 A2 vorgeschlagenen Bedienvorrichtung ist eine berührungsempfindliche Oberfläche vorgesehen, innerhalb derer zwei getrennte Flächen ausgebildet sind. Dabei wird ein Parameter inkrementell verändert, wenn eine der Flächen berührt wird oder eine Streichgeste auf der berührungsempfindlichen Oberfläche ausgeführt wird.

Die DE 10 2008 061 987 A1 schließlich beschreibt ein Bedienverfahren, bei dem eine Schaltfläche zum Verändern eines Einstellparameters angezeigt wird, wobei der Einzelparameter durch Wischgeste über den Bereich der Schaltfläche hinweg verändert wird.

Die DE 10 2011 116 187 A1 betrifft ein Verfahren zum Bereitstellen einer Nutzerschnittstelle, bei dem ein flächiges, graphisches Objekt mit einem Informationsgehalt und/oder einem bedienbaren Funktionsumfang in einem Bereich auf einer Anzeigefläche dargestellt wird. Es wird eine Geste zum Seitenumblättern auf oder vor der Anzeigefläche in oder vor dem Bereich erfasst, in dem das graphische Objekt dargestellt wird, die Darstellung des graphischen Objekts wird in einer Bildfolge verändert, welche ein Umblättern einer Seite des graphischen Objekts visualisiert, und der Informationsgehalt und/oder der bedienbare Funktionsumfang des graphischen Objekts wird verändert.

Die EP 2 924 551 beschreibt ein Verfahren und eine Vorrichtung zum Bereitstellen einer graphischen Benutzerschnittstelle in einem Fahrzeug, wobei das Fahrzeug zumindest zwei Fahrzeugfunktionen umfasst.

Der vorliegenden Erfindung liegt daher die Aufgabe zugrunde, ein Verfahren zum Bedienen einer Einrichtung, eine Bedienvorrichtung zum Bedienen einer Einrichtung sowie ein Fahrzeug bereitzustellen, die eine besonders schnell erfassbare Ausgabe relevanter Informationen und eine einfache Bedienung ermöglichen.

Erfindungsgemäß wird diese Aufgabe durch ein Verfahren mit den Merkmalen des Anspruchs 1 und eine Bedienvorrichtung mit den Merkmalen des Anspruchs 10 sowie ein Fahrzeug mit den Merkmalen des Anspruchs 14 gelöst. Vorteilhafte Ausgestaltungen und Weiterbildungen ergeben sich aus den abhängigen Ansprüchen.

Das erfindungsgemäße Verfahren der eingangs genannten Art ist dadurch gekennzeichnet, dass das Bedienobjekt einen ersten Bereich und einen zweiten Bereich aufweist und die Eingabegeste dem ersten oder zweiten Bereich zugeordnet wird. Dabei wird, wenn die Eingabegeste dem zweiten Bereich zugeordnet worden ist und eine Geste des ersten Gestentyps umfasst, eine Vollbilddarstellung des Anwendungsprogramms erzeugt und angezeigt und,wenn die Eingabegeste eine Geste eines zweiten Gestentyps umfasst, ein weiterer Funktionsparameter ausgewählt.

Als "grafische Bedienoberfläche" im Sinne der Erfindung wird eine grafische Darstellung für eine Mensch-Maschine-Schnittstelle bezeichnet. Dabei sind technische Einrichtungen mittels Steuerelementen bedienbar, wozu etwa Schaltflächen oder Symbole der Darstellung verwendet werden können. Insbesondere umfasst die Bedienoberfläche Bedienobjekte, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Menschen interpretierbare Ausgabe ermöglichen.

Unter einem "Bedienobjekt" wird im Sinne der Erfindung ein Objekt verstanden, welches grafisch auf der Anzeigefläche dargestellt wird und welches einer Anwendung zugeordnet ist, die zum Beispiel von einer Einrichtung eines Fahrzeugs ausgeführt wird. Ein Bedienobjekt kann insbesondere als Widget-Objekt gebildet sein. Es kann dabei insbesondere in einem bestimmten Bereich der Anzeigefläche Informationen anzeigen, die laufend aktualisiert werden. Beispielsweise können von dem Bedienobjekt Routeninformationen eines Navigationssystems, aktuelle Meldungen zum Wetter, zum Straßenzustand und zum Verkehrszustand angezeigt werden sowie Informationen zu Multimedia-Einrichtungen. Das Bedienobjekt wird insbesondere unabhängig vom weiteren Anzeigeinhalt der Anzeigefläche dargestellt. Wenn das Bedienobjekt als Anzeigefenster ausgebildet wird, können auch grafische Objekte in dem Anzeigefenster Bedienobjekte beziehungsweise Widget-Objekte sein. Dabei hat der Nutzer über das Anzeigefenster Zugang zu anderen Bedienobjekten.

Die Bedienobjekte der Bedienoberfläche werden dabei insbesondere in einem bestimmten Flächenbereich der Anzeigefläche angezeigt. Dabei ist insbesondere vorgesehen, dass die Bedienoberfläche eine Vielzahl von Bedienobjekten umfasst, wobei die Bedienobjekte nach der Art von Kacheln angeordnet sein können, das heißt, die Bedienobjekte sind so geometrisch gebildet, dass sie aneinander angrenzen und einen bestimmten Flächenbereich im Wesentlichen vollständig bedecken. Dabei kann ferner vorgesehen sein, dass die Bedienobjekte im Sinne der Erfindung in einem bestimmten Flächenbereich der Bedienoberfläche angeordnet sind, während ein weiterer Flächenbereich von den Bedienobjekten ausgenommen ist, beispielsweise ein Flächenbereich für eine Informationsanzeige, die auf andere Weise als die Bedienobjekte gebildet ist.

Erfindungsgemäß weist das Bedienobjekt einen ersten und einen zweiten Bereich auf. Die Eingabegeste wird dabei abhängig davon interpretiert, in welchem Bereich des Bedienobjekts sie detektiert wurde. Insbesondere erfolgt eine Anzeige des Bedienobjekts so, dass die beiden Bereiche verdeutlicht werden, zum Beispiel durch eine Linie, durch welche die Bereiche voneinander abgegrenzt werden, oder durch eine abweichende Gestaltung, beispielsweise durch verschiedene Farbe, Helligkeit und/oder Strukturierung. Die dargestellte Abgrenzung der beiden Bereiche muss dabei nicht zwangsläufig damit übereinstimmen, wie Eingabegesten interpretiert werden. Zum Beispiel kann die Darstellung der beiden Bereiche so erfolgen, dass die Bereiche kleiner erscheinen als sie tatsächlich beim Zuordnen der Eingabegeste definiert sind.

Erfindungsgemäß ist vorgesehen, dass eine Vollbilddarstellung des Anwendungsprogramms angezeigt werden kann. Dies erfolgt nach dem Erfassen einer Eingabegeste, die dem zweiten Bereich zugeordnet wird und eine Geste des ersten Gestentyps umfasst. Dabei wird insbesondere zwischen einer Darstellung der Ausgabedaten des Anwendungsprogramms mittels des Bedienobjekts und der Vollbilddarstellung gewechselt. Die Vollbilddarstellung unterscheidet sich von der Darstellung des Bedienobjekts insbesondere durch die von der Anzeige der Ausgabedaten eingenommene Fläche. Beispielsweise kann, wenn die Vollbilddarstellung angezeigt wird, kein weiteres Bedienobjekt im Sinne der Erfindung dargestellt werden. Es können allerdings bei der Vollbilddarstellung des Anwendungsprogramms Bereiche der Anzeigefläche vorgesehen sein, in denen eine Anzeige unabhängig von den Ausgabedaten des Anwendungsprogramms erfolgt. Beispielsweise kann dies ein Informationsbereich sein, etwa eine Statusleiste oder ein Navigationsbereich, in der Informationen von übergreifender Bedeutung angezeigt werden, beispielsweise eine Uhrzeit.

Erfindungsgemäß erfolgt die Steuerung der zu steuernden Einrichtung mittels eines Anwendungsprogramms. Durch die Anzeige der Ausgabedaten können Informationen ausgegeben werden, die mit dem Anwendungsprogramm in Verbindung stehen. Ferner kann eine Bedienung mittels der grafischen Bedienoberfläche beziehungsweise des Bedienobjekts erfolgen, wobei durch eine Nutzereingabe Parameter zum Betrieb der Einrichtung verändert werden können. Insbesondere sind dazu zwei aktivierbare Programmzustände einer Funktion des Anwendungsprogramms vorgesehen.

Die Programmzustände können dabei auf an sich bekannte Weise gebildet sein. Insbesondere betreffen sie eine grundlegende Funktionalität der Einrichtung, etwa das Aktivieren oder Deaktivieren einer bestimmten Aktivität der Einrichtung. Zum Beispiel kann anhand der Programmzustände ein Ein- und Ausschalten einer Funktionalität erfolgen. Erfindungsgemäß ist vorgesehen, dass zunächst ein bestimmter Programmzustand aktiviert ist.

Die Ausgabedaten werden insbesondere so erzeugt, dass ein Nutzer den aktivierten Programmzustand erfassen kann. Zum Beispiel kann dies durch eine Anzeige eines Symbols erfolgen, das dem aktivierten Programmzustand zugeordnet ist. Ferner können auf an sich bekannte Weise verschiedene Darstellungsformen vorgesehen sein, durch die sich die angezeigten Ausgabedaten je nach dem aktivierten Programmzustand unterscheiden können.

Die Erfassung der Eingabegeste erfolgt auf an sich bekannte Weise. Insbesondere wird dabei eine berührungsempfindliche Oberfläche verwendet, wobei eine Position einer Berührung auf der berührungsempfindlichen Oberfläche detektiert wird. Gegebenenfalls können weitere Parameter der Berührung, etwa eine Intensität oder eine Zeitdauer detektiert werden.

Insbesondere wird die Geste mittels eines Betätigungsobjekts durchgeführt, beispielsweise mittels eines Stifts oder der Hand beziehungsweise eines Fingers des Nutzers. Unter einer "Geste" wird im Sinne der Erfindung eine bestimmte Position und/oder Stellung des Betätigungsobjekts oder eine bestimmte Bewegung, die mit dem Betätigungsobjekt ausgeführt wird, verstanden.

Die Gesten können dabei nach an sich bekannter Art ausgestaltet sein. Sie können insbesondere als verschiedene Gestentypen klassifiziert werden, wobei ein "Gestentyp" beispielsweise eine Menge von Gesten bezeichnet, die durch bestimmte Parameter beschrieben werden können. Dies können beispielsweise Tippgesten sein, durch die eine bestimmte Position innerhalb eines Detektionsbereichs vollständig bestimmt sind, zum Beispiel durch eine Berührung einer Oberfläche an einer bestimmten Position. Ferner kann eine Berührungsdauer berücksichtigt werden. Zudem kann ein Gestentyp beispielsweise Wischgesten umfassen, wobei eine Wischgeste beschrieben wird durch eine Startposition, bei der eine Berührung der Oberfläche einsetzt, und eine Endposition, bei der die Berührung beendet wird, sowie gegebenenfalls einen Bewegungsablauf von der Start- zur Endposition.

Bei einer Ausbildung des erfindungsgemäßen Verfahrens weist das Anwendungsprogramm ferner zumindest zwei auswählbare Funktionsparameter auf, wobei die Ausgabedaten ferner anhand des ausgewählten Funktionsparameter erzeugt werden. Dabei ist ein erster Funktionsparameter ausgewählt und es wird, wenn die Eingabegeste eine Geste eines zweiten Gestentyps umfasst, ein weiterer Funktionsparameter ausgewählt. Insbesondere weist die Funktion des Anwendungsprogramms die Funktionsparameter auf.

Dadurch kann das Anwendungsprogramm vorteilhafterweise durch die Auswahl des Funktionsparameter bedient werden. Die Funktionsparameter umfassen dabei Parameter zum Betrieb des Anwendungsprogramms beziehungsweise der Funktion des Anwendungsprogramms, die von den beiden Programmzuständen nicht umfasst sind. Zum Beispiel können Funktionsparameter Informationen umfassen, durch die beispielsweise die Ausführung des Anwendungsprogramms spezifiziert wird, etwa indem ein Speicherort einer durch das Anwendungsprogramm zu verarbeitenden Datei angeben wird.

Hierbei kann vorgesehen sein, dass die Geste eines zweiten Gestentyps unabhängig davon interpretiert wird, welchem Bereich des Bedienobjekts sie zugeordnet ist. Die Geste kann in diesem Fall mit geringerer Genauigkeit ausgeführt werden, sodass dabei eine geringere Aufmerksamkeit des Nutzers erforderlich ist. Dies ist insbesondere vorteilhaft beim Einsatz in Bereichen, in denen nur eine geringe Aufmerksamkeit der Bedienung zugewandt werden kann, zum Beispiel in einem Fahrzeug. Zum Beispiel kann eine solche Geste im ersten oder zweiten Bereich des Bedienobjekts erfasst werden und/oder die Geste kann keinem der Bereiche zugeordnet sein. Ferner kann die Geste so erfasst werden, dass sie beiden Bereichen zugeordnet werden kann, zum Beispiel bei einer Geste, die eine Bewegung von einem Bereich zu dem anderen umfasst.

Insbesondere kann der erste Gestentyp Tippgesten und der zweite Gestentyp Wischgesten umfassen. Das heißt, eine Geste des ersten Gestentyps definiert eine Berührungsposition, insbesondere im Bereich des Bedienobjekts. Eine Geste des zweiten Gestentyps definiert eine Anfangs- und Endposition. Ferner kann der Verlauf einer Bewegung von der Anfangs- zur Endposition berücksichtigt werden.

Bei einer weiteren Ausbildung sind die Funktionsparameter geordnet in einer Liste gespeichert. Dadurch kann vorteilhafterweise eine besonders einfache Auswahl der Funktionsparameter erfolgen, insbesondere mittels eines Durchlaufens der Liste von Funktionsparametern.

Die Liste ist dabei geordnet, das heißt, für jeden Funktionsparameter der Liste ist zumindest ein nachfolgender und/oder vorhergehender Funktionsparameter der Liste definiert. Insbesondere kann vorgesehen sein, dass beim Erreichen des Endes der Liste der erste Listeneintrag als nachfolgender Funktionsparameter definiert ist und umgekehrt beim Erreichen des Anfangs der Liste der letzte Listeneintrag.

Bei einer Weiterbildung des Verfahrens ist anhand des zweiten Gestentyps eine erste Richtung entlang einer ersten Bewegungsachse bestimmbar und der weitere Funktionsparameter wird anhand der ersten Richtung ausgewählt. Dadurch kann vorteilhafterweise eine besonders einfache Auswahl des Funktionsparameter erfolgen.

Zum Beispiel kann die Bestimmung der Richtung anhand einer Anfangs- und einer Endposition einer Wischgeste erfolgen. Die Bewegungsachse kann dabei insbesondere senkrecht oder waagerecht relativ zu einer typischen Betrachtung der Bedienoberfläche definiert sein. Insbesondere kann die Bedienoberfläche zumindest eine Erstreckungsrichtung aufweisen, zum Beispiel eine Quer- und Längserstreckung bei einer rechteckig ausgebildeten Bedienoberfläche.

Zum Beispiel kann eine senkrechte Bewegungsachse so definiert sein, dass sie entlang der Oberfläche der Anzeigefläche und senkrecht zu einer typischen waagrechten Leserichtung auf der Anzeigefläche verläuft. In diesem Fall können Richtungen entlang der senkrechten Bewegungsachse als "aufwärts" oder "abwärts" erfasst werden. Die Auswahl des weiteren Funktionsparameters kann dann erfolgen, indem abhängig von der Richtung der erfassten Eingabegeste der nächste oder vorherige Listeneintrag der Liste von Funktionsparametern ausgewählt wird. Zum Beispiel kann der nächste Listeneintrag gewählt werden, wenn die Geste nach oben erfasst wurde, und der vorige Listeneintrag, in die Geste nach unten erfasst wurde. In weiteren Beispielen kann die Auswahl auf andere Weise erfolgen.

Bei einer Ausbildung ist anhand des zweiten Gestentyps ferner eine weitere Richtung entlang einer weiteren Bewegungsachse senkrecht zu der ersten Bewegungsachse bestimmbar und, wenn die Eingabegeste eine Richtung entlang der weiteren Bewegungsachse aufweist, wird eine Verschiebung der grafischen Bedienoberfläche angezeigt. Dadurch kann vorteilhafterweise eine Veränderung eines dargestellten Ausschnitts der Bedienoberfläche vorgenommen werden. Insbesondere kann vorgesehen sein, dass auf an sich bekannte Weise die Bedienoberfläche so gebildet ist, dass sie die Abmessungen der Anzeigefläche überschreitet, das heißt, die Bedienoberfläche kann nicht vollständig auf der Anzeigefläche angezeigt werden, sondern es wird ein Ausschnitt der Bedienoberfläche angezeigt. Dabei kann zum Beispiel vorgesehen sein, dass der angezeigte Ausschnitt so gebildet ist, das seitlich daneben verborgene Bereiche der Bedienoberfläche angeordnet sind. In diesem Fall kann eine seitliche Verschiebung der Bedienoberfläche durchgeführt werden, um den dargestellten Ausschnitt zu verschieben. Dies kann etwa als kontinuierliche Verschiebung dargestellt werden oder als schrittweises Durchlaufen verschiedener Anzeigen von Ausschnitten. Dies kann beispielsweise durch eine seitliche Wischgeste erfolgen, wobei bei dieser eine waagrechte Richtung nach rechts oder links bestimmbar ist. Insbesondere steht diese waagrechte Richtung senkrecht auf der senkrechten Richtung der ersten Bewegungsachse, wie sie oben beispielhaft beschrieben wurde. Die Richtung der zweiten Bewegungsachse kann bei anderen Beispielen auf andere Weise definiert sein.

Bei einer weiteren Ausbildung werden die Ausgabedaten des Anwendungsprogramms in dem ersten Bereich des Bedienobjekts angezeigt. Dadurch können vorteilhafterweise Daten durch das Anwendungsprogramm ausgegeben und von einem Nutzer erfasst werden. Die angezeigten Ausgabedaten können dabei auf an sich bekannte Weise gebildet sein und zum Beispiel schriftliche Informationen über einen Betrieb des Anwendungsprogramms umfassen. Ferner können sie grafische Darstellungen umfassen.

Bei einer weiteren Ausbildung sind die im zweiten Bereich des Bedienobjekts ausgegebenen Ausgabedaten unabhängig von dem aktivierten Programmzustand und dem ausgewählten Funktionsparameter. Dadurch kann vorteilhafterweise sichergestellt werden, dass der zweite Bereich für den Nutzer leicht erkennbar gebildet wird. Beispielsweise kann in dem zweiten Bereich ein Symbol angezeigt werden, dass in direktem Zusammenhang mit dem Anwendungsprogramm steht und einem Nutzer beispielsweise anzeigt, dass durch eine Geste des ersten Gestentyps in dem zweiten Bereich eine Vollbilddarstellung des Anwendungsprogramms aufrufbar ist. Ferner kann eine neutrale Darstellung erzeugt werden, welche keine näheren Informationen über den Betrieb des Anwendungsprogramms ausgeben, sondern beispielsweise lediglich einer Identifikation des Anwendungsprogramms dienen.

Bei einer Weiterbildung ist die grafische Bedienoberfläche eine Hauptanzeige. Damit kann vorteilhafterweise die Bedienung der Einrichtung ausgehend von der Hauptanzeige aus erfolgen.

Als "Hauptanzeige" wird dabei eine Anzeige verstanden, die insbesondere dann angezeigt wird, wenn eine Anzeigeeinheit, zu welcher die Anzeigefläche gehört, eingeschaltet wird. Insbesondere kann sie beim Einschalten der zu bedienenden Einrichtung und/oder eines diese umfassenden Systems, beispielsweise eines Fahrzeugs, eingeschaltet werden. Ferner kann vorgesehen sein, dass die Hauptanzeige besonders leicht zu erreichen ist, insbesondere um ausgehend von einem Menü oder einer Anzeige eines Anwendungsprogramms zu der Hauptanzeige zurückzukehren, zum Beispiel durch Betätigen eines Schalters oder eines anderen Bedienelements. Dabei kann die Hauptanzeige vom Nutzer selbst konfiguriert werden. Insbesondere kann der Nutzer für unterschiedliche Themen unterschiedliche Hauptanzeigen konfigurieren. Dabei wird dann bei einem Themenwechsel die zugehörige Hauptanzeige angezeigt. Eine Hauptanzeige wird im Allgemeinen auch als Home-Screen bezeichnet.

Insbesondere kann vorgesehen sein, dass der Aufruf der Vollbilddarstellung eines Anwendungsprogramms nur von der Hauptanzeige aus erfolgen kann. Insbesondere ist in diesem Fall kein weiteres Menü zum Aufrufen der Vollbilddarstellung vorgesehen, sondern die Hauptanzeige wird als ein solches Menü für den Nutzer bereitgestellt.

Bei einer Ausbildung nehmen der erste und zweite Bereich die gesamte Fläche des Bedienobjekts ein. Insbesondere überschneiden sich der erste und zweite Bereich nicht. Dadurch kann vorteilhafterweise die gesamte Fläche des von der Bedienoberfläche umfassten Bedienobjekts durch die beiden Bereiche strukturiert werden. Insbesondere umfasst das Bedienobjekt keine weiteren Bereiche. Die grafische Darstellung der Bereiche kann dabei so erfolgen, dass zum Beispiel ein Zwischenraum zwischen den Bereichen des Bedienobjekts angezeigt wird, wobei auch Positionen des Zwischenraums jeweils einem der Bereiche zugeordnet werden können.

In weiteren Ausführungsbeispielen können dagegen weitere Bereiche des Bedienobjekts vorgesehen sein, zum Beispiel um Eingaben eines Nutzers in Abhängigkeit von den verschiedenen Bereichen in verschiedener Weise zu interpretieren.

Bei einer Weiterbildung wird durch das Anwendungsprogramm eine Medienwiedergabe, eine Telefoneinrichtung, ein Navigationssystem und/oder ein Informationssystem gesteuert. Dadurch können vorteilhafterweise besonders relevante Einrichtungen durch das erfindungsgemäße Verfahren bedient werden. Insbesondere kann die anhand der aktivierbaren Programmzustände bedienbare Funktion je nach der zu bedienenden Einrichtung spezifisch gebildet sein.

Zum Beispiel kann bei einer Medienwiedergabe eine Mediendatei wiedergegeben werden. Dabei kann der erste Programmzustand ein Abspielen und der zweite Programmzustand ein Pausieren der Wiedergabe umfassen. Das heißt, wenn eine Eingabegeste des ersten Gestentyps, etwa eine Tippgeste, im ersten Bereich des Bedienobjekts erfasst wird, kann zwischen dem Abspielen und dem Pausieren der Wiedergabe umgeschaltet werden. Ferner können wiedergebbare Mediendateien als Liste von Objekten organisiert seien. Durch eine Eingabegeste des zweiten Eingabetyps, insbesondere eine Wischgeste in einer senkrechten Richtung, kann der nächste oder vorige Eintrag der Liste als abzuspielende Mediendatei ausgewählt werden.

In einem weiteren Beispiel kann bei der Medienwiedergabe das Programm eines Radiosenders empfangen und ausgegeben werden. In diesem Fall können die beiden Programmzustände ein Abspielen und eine Stummschaltung umfassen. Durch eine Geste des ersten Gestentyps im ersten Bereich des Bedienobjekts kann dabei zwischen den beiden Programmzuständen umgeschaltet werden. Durch eine Eingabegeste des zweiten Typs kann ferner ein Wechsel des Radiosenders bewirkt werden, wobei insbesondere verfügbare Radiosender als Objekte einer Liste repräsentiert sind, zum Beispiel geordnet nach ihren Frequenzen.

Ferner kann bei einer Telefoneinrichtung eine Liste von verfügbaren Kontakten verfügbar sein und die Kontakte können durch eine Eingabegeste des zweiten Typs ausgewählt werden, wobei insbesondere die Listeneinträge nacheinander ausgewählt werden. Beim Umschalten zwischen den Programmzuständen durch die Eingabegeste des ersten Typs im ersten Bereich kann zum Beispiel zwischen einem Anrufen und Annehmen eines Anrufs umgeschaltet werden.

Zudem kann bei einem Navigationssystem beispielsweise eine Liste von Zielen verfügbar sein, die angesteuert werden können. Eine Auswahl eines Ziels kann dabei durch die Eingabegeste des zweiten Typs erfolgen. Ferner kann durch ein Umschalten zwischen den Programmzuständen durch die Eingabegeste des ersten Typs im ersten Bereich zum Beispiel ein Wechsel zwischen einer zweidimensionalen und einer dreidimensionalen Ansicht einer Ausgabe des Navigationssystems erfolgen.

Durch ein Informationssystem können Informationen verschiedener Art ausgegeben werden, wobei insbesondere durch die zu bedienende Einrichtung Informationen weiterer Einrichtungen erfasst werden. Zum Beispiel kann dies in einem Fahrzeug erfolgen, in dem durch das Informationssystem Daten verschiedener Fahrzeugkomponenten und Systeme im Fahrzeug erfasst und für den Nutzer ausgegeben werden können. Dabei kann eine Liste von Objekten verfügbar sein, welche verschiedenen weiteren Einrichtungen zugeordnet sind. Durch eine Auswahl mittels einer Geste des zweiten Gestentyps kann zwischen der Ausgabe von Informationen für verschiedene Einrichtungen gewählt werden. Ferner kann durch ein Umschalten zwischen den Programmzuständen durch die Eingabegeste des ersten Typs im ersten Bereich des Bedienobjekts eine grundlegende Bedienung erfolgen, wobei beispielsweise zwischen verschiedenen Anzeigeformen umgeschaltet werden kann oder abhängig davon, für welche weitere Einrichtung gerade Informationen ausgegeben werden, verschiedene Bedienungen für die weiteren Einrichtungen vorgenommen werden.

Analog zu den erläuterten Beispielen kann die Vollbilddarstellung, die nach einer Eingabegeste des ersten Typs im zweiten Bereich erzeugt und angezeigt wird, eine sich auf einen größeren Flächenbereich der Anzeigefläche erstreckende Anzeige für die Bedienung der jeweiligen Einrichtung umfassen.

Die Bedienvorrichtung der eingangs genannten Art ist dadurch gekennzeichnet, dass das Bedienobjekt einen ersten Bereich und einen zweiten Bereich aufweist und die Eingabegeste dem ersten oder zweiten Bereich zuordenbar ist. Dabei ist, wenn die Eingabegeste dem ersten Bereich zugeordnet worden ist und eine Geste eines ersten Gestentyps umfasst, der zweite Programmzustand aktivierbar. Ferner ist, wenn die Eingabegeste dem zweiten Bereich zugeordnet worden ist und eine Geste des ersten Gestentyps umfasst, eine Vollbilddarstellung des Anwendungsprogramms erzeugbar und anzeigbar.

Die erfindungsgemäße Bedienvorrichtung ist insbesondere ausgebildet, das vorstehend beschriebene erfindungsgemäße Verfahren zu implementieren. Die Bedienvorrichtung weist somit dieselben Vorteile auf wie das erfindungsgemäße Verfahren.

Bei einer Ausbildung der Bedienvorrichtung umfasst die Anzeigeeinheit ein Mobilgerät. Insbesondere kann ferner die Eingabeeinheit von einem Mobilgerät umfasst sein. Dadurch kann vorteilhafterweise ein Mobilgerät zum Bedienen der Einrichtung verwendet werden. Dabei ist das Mobilgerät insbesondere eine externe Einheit gegenüber der zu bedienenden Einrichtung beziehungsweise gegenüber einem System, welches die zu bedienende Einrichtung umfasst. Zum Beispiel kann das Mobilgerät ein Mobiltelefon eines Nutzers sein, ein Tablet-Computer, ein tragbarer Computer, eine Smartwatch oder ein anderes mobiles Nutzergerät.

Zum Beispiel kann eine trennbar datentechnische Verbindung zwischen dem Mobilgerät und der zu bedienenden Einrichtung hergestellt werden. Zum Beispiel kann dies mittels einer Funkverbindung oder einer kabelgebundenen Verbindung erfolgen. Dabei kann insbesondere ein Touchscreen eines Mobilgeräts verwendet werden, um die grafische Bedienoberfläche anzuzeigen sowie Nutzereingaben zu erfassen. Dabei können in verschiedenen Ausführungsformen der Erfindung unterschiedliche Schritte der Bedienung durch das Mobilgerät oder weitere Einrichtungen ausgeführt werden.

Bei einer weiteren Ausbildung weist das Anwendungsprogramm ferner zumindest zwei auswählbare Funktionsparameter auf, wobei die Ausgabedaten ferner anhand des ausgewählten Funktionsparameters erzeugbar sind. Dabei ist ein erster Funktionsparameter ausgewählt und, wenn die Eingabegeste eine Geste eines zweiten Gestentyps umfasst, ist ein weiterer Funktionsparameter auswählbar. Dadurch kann vorteilhafterweise eine schnelle und einfache Auswahl eines Funktionsparameter erfolgen.

Insbesondere umfasst der erste Gestentyp Tippgesten und der zweite Gestentyp Wischgesten. Insbesondere wird bei Gesten des zweiten Gestentyps eine Richtung bestimmt, zum Beispiel bei einer Wischgeste nach oben oder unten, und es erfolgt eine Auswahl des Funktionsparameters anhand der bestimmten Richtung. Insbesondere kann dabei vorgesehen sein, dass die Funktionsparameter als Objekte einer geordneten Liste verfügbar sind, wobei anhand der Errichtung einer Wischgeste entweder das nächste oder vorige Objekt ausgewählt wird. Ferner kann vorgesehen sein, dass bei einer Geste des zweiten Gestentyps, für welche eine andere Richtung, beispielsweise nach rechts oder links, bestimmt wurde, eine Verschiebung der angezeigten Bedienoberfläche angezeigt wird, beispielsweise um einen dargestellten Ausschnitt der Bedienoberfläche zu verändern.

Bei einer Weiterbildung umfasst die Einrichtung ein Medienwiedergabesystem, eine Telefoneinrichtung, ein Navigationssystem oder ein Informationssystem. Dadurch sind vorteilhafterweise besonders wichtige Einrichtungen bedienbar.

Das erfindungsgemäße Fahrzeug umfasst eine Bedienvorrichtung der oben beschriebenen Art. Die Bedienvorrichtung kann dadurch besonders vorteilhaft eingesetzt werden, da gerade in Fahrzeugen eine besonders einfache und schnelle Bedienung erforderlich ist, die es insbesondere einem Fahrer des Fahrzeugs erlaubt, ohne weitere Konzentration auf die Bedienung Eingaben vorzunehmen und Einrichtungen zu bedienen.

Die Erfindung wird nun anhand von Ausführungsbeispielen mit Bezug zu den Zeichnungen erläutert.
- Figur 1: zeigt ein Ausführungsbeispiel des erfindungsgemäßen Fahrzeugs,
- Figur 2: zeigt ein Ausführungsbeispiel einer durch das erfindungsgemäße Verfahren erzeugten Bedienoberfläche und
- Figur 3: zeigt ein Ausführungsbeispiel eines Bedienobjekts der Bedienoberfläche.

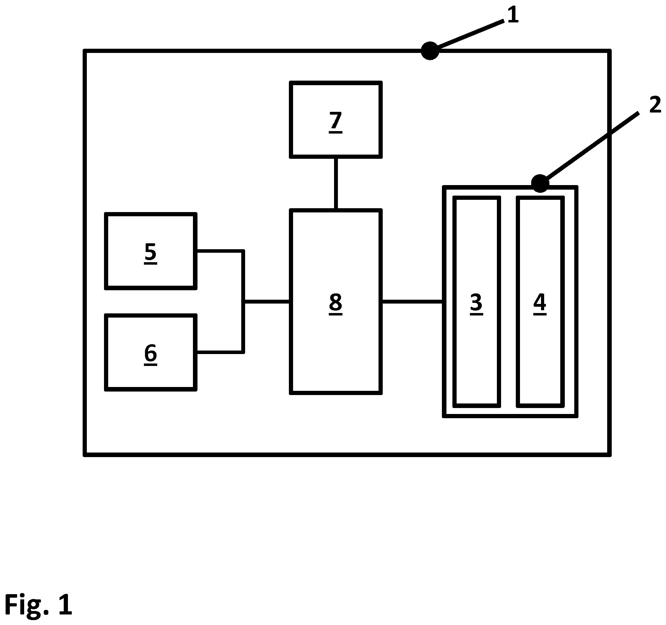

Mit Bezug zu Figur 1 wird ein Ausführungsbeispiel des erfindungsgemäßen Fahrzeugs erläutert.

Ein Fahrzeug 1 umfasst eine Grafikeinheit 5, eine Recheneinheit 6 sowie eine Anzeigeeinheit 2, die mit einer Steuereinheit 8 gekoppelt sind. Dabei umfasst die Anzeigeeinheit 2 eine Anzeigefläche 3 und eine Eingabeeinheit 4. Mit der Steuereinheit 8 ist ferner eine Einrichtung 7 gekoppelt, die in dem Ausführungsbeispiel ein Medienwiedergabesystem 7 ist.

In dem dargestellten Ausführungsbeispiel ist die Eingabeeinheit 4 als berührungsempfindliche Oberfläche 4 ausgebildet. Die Anzeigeeinheit 2 ist daher ein so genannter Touchscreen 2. Beispielsweise kann dabei eine Folie über der Anzeigefläche 3 angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 3 angezeigten grafischen Objekt zugeordnet werden. Des Weiteren kann die Dauer der Berührung bei einer bestimmten Position oder innerhalb eines bestimmten Bereichs erfasst werden. Ferner können Gesten erfasst werden, wobei insbesondere eine zeitliche Veränderung einer Position einer Berührung erfasst wird.

In weiteren Ausführungsbeispielen ist vorgesehen, dass der Touchscreen 2 von einem Mobilgerät umfasst ist. Es kann sich dabei beispielsweise um ein Mobiltelefon, einen Tablet-Computer, einen tragbaren Computer oder ein weiteres mobiles Gerät eines Nutzers handeln. Der Touchscreen 2 kann in diesem Fall trennbar datentechnisch mit der Steuereinheit 8 verbunden sein, beispielsweise mittels einer funktechnischen oder kabelgebundenen Verbindung. Insbesondere kann vorgesehen sein, dass in dem Fahrzeug eine Anschlusseinrichtung für ein Mobilgerät vorgesehen ist, zum Beispiel eine Halterung für ein Mobilgerät, die ferner einen Anschluss aufweist, durch den die datentechnische Verbindung hergestellt werden kann. Der Touchscreen 2 kann in diesem Fall als externe Einrichtung in das System integriert werden, beispielsweise als zusätzliche Einheit zur Anzeige der grafischen Bedienoberfläche und zur Erweiterung der Bedienmöglichkeiten. Insbesondere kann dabei in Fahrzeugen mit wenigen oder kleinflächigen Anzeigen eine Erweiterung der Möglichkeiten zur Anzeige einer grafischen Bedienoberfläche erreicht werden.

Mit Bezug zu den Figuren 1, 2 und 3 wird ein Ausführungsbeispiel des erfindungsgemäßen Verfahrens erläutert. Dabei wird insbesondere von dem oben erläuterten erfindungsgemäßen Fahrzeug ausgegangen.

Durch die Grafikeinheit 5 werden Grafikdaten einer grafischen Bedienoberfläche 20 erzeugt und an die Anzeigeeinheit 2 übertragen, wo sie auf der Anzeigefläche 3 angezeigt werden. Die grafische Bedienoberfläche 20 ist dabei eine Hauptanzeige, das heißt, sie wird angezeigt, wenn das System gestartet wird, und sie kann durch eine einfache Bedienhandlung, etwa durch das betätigen eines dafür vorgesehenen Schalters oder einer Schaltfläche, wieder aufgerufen werden. Ferner ist vorgesehen, dass die Hauptanzeige durch einen Nutzer konfiguriert werden kann.

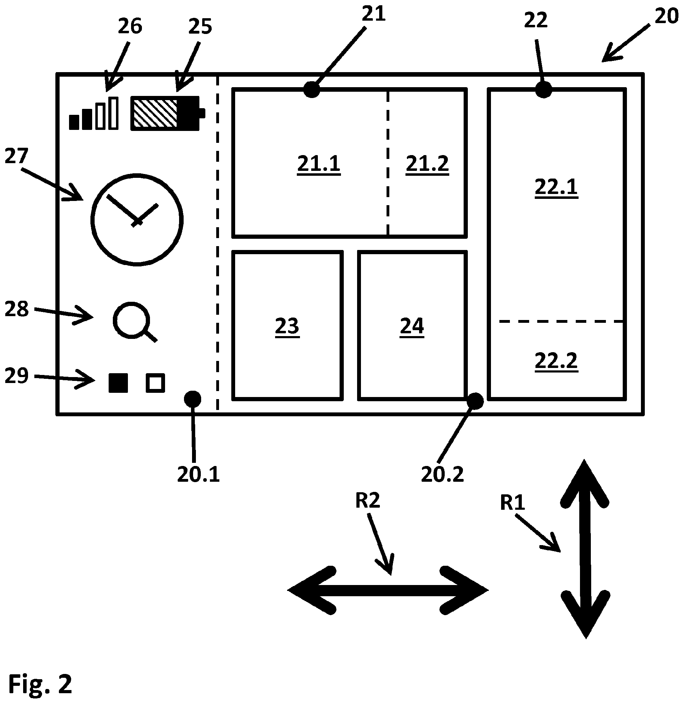

Die grafische Bedienoberfläche 20 umfasst in dem Ausführungsbeispiel einen Navigationsbereich 20.1 und einen Anwendungsbereich 20.2, wobei in Figur 2 die Grenze zwischen den beiden Bereichen durch eine gestrichelte Linie angedeutet ist. In dem Ausführungsbeispiel wird die Bedienoberfläche 20 so erzeugt, dass ihre Abmessungen die darstellbare Größe der Anzeigefläche 3 überschreiten. Es kann daher nur ein Ausschnitt der grafischen Bedienoberfläche 20 dargestellt werden. Insbesondere ist hier vorgesehen, dass ein "Blättern" in dem Anwendungsbereich 20.2 durchgeführt werden kann, wobei verschiedene Darstellungen des Anwendungsbereichs 20.2 als verschiedene Seiten einer Gesamtdarstellung angezeigt werden, zwischen denen umgeschaltet werden kann.

In dem Navigationsbereich 20.1 werden verschiedene Daten durch Symbole ausgegeben, wobei die Anzeige des Navigationsbereich 20.1 unabhängig davon ist, welche Anwendungen in dem Anwendungsbereich 20.2 dargestellt werden. Bei dem Ausführungsbeispiel umfasst die grafische Bedienoberfläche 20 in dem Navigationsbereich 20.1 ein Symbol 26 für die Darstellung der Qualität eines empfangbaren Mobilnetzes, ein Symbol 25 zum Anzeigen eines Ladezustands beispielsweise einer Batterie des Mobilgeräts, welches den Touchscreen 2 umfasst, sowie ein Symbol 27, dass die Uhrzeit ausgibt. Ferner ist ein Symbol 28 für eine Suchfunktion umfasst, wobei durch Betätigen des Symbols 28 durch eine Tippgeste eine Suchfunktion aufgerufen und im Anwendungsbereich 20.2 dargestellt werden kann. Zudem ist ein Symbol 29 für die Ansicht der Bedienoberfläche 20 umfasst, wobei dem Nutzer angezeigt wird, was für ein Ausschnitt der Bedienoberfläche gerade angezeigt wird, wobei hier zwei Ausschnitte der Bedienoberfläche vorgesehen sind, die angezeigt werden können, wobei insbesondere ein "Blättern" zum Umschalten zwischen den beiden Ausschnitten vorgenommen werden kann.

In dem Anwendungsbereich 20.2 werden Bedienobjekte 21, 22, 23, 24 angezeigt, die jeweils einem Anwendungsprogramm zugeordnet sind. Insbesondere können durch die zugeordneten Anwendungsprogramme verschiedene Einrichtungen 7 des Fahrzeugs 1 bedient werden, insbesondere das Medienwiedergabesystem 7. Die Bedienobjekte 21, 22, 23, 24 sind dabei als Kacheln angeordnet, das heißt, sie füllen die Fläche des Anwendungsbereichs 20.2 im Wesentlichen vollständig aus. Dabei ist zudem vorgesehen, dass dargestellten Zwischenräume zwischen den Bedienobjekten 21, 22, 23, 24 ebenfalls den Bedienobjekten 21, 22, 23, 24 zugeordnet sind, sodass eine lückenlose Zuordnung aller Positionen innerhalb des Anwendungsbereichs 20.2 ermöglicht wird. Die Bedienobjekte 21, 22, 23, 24 sind dabei rechteckig und weisen verschiedene Abmessungen auf. Insbesondere ist vorgesehen, dass zumindest ein Teil der Bedienobjekte 21, 22 zwei Bereiche 21.1, 21.2, 22.1, 22.2 aufweisen, wobei die Trennung der Bereiche 21.1, 21.2, 22.1, 22.2 hier durch gestrichelte Linien dargestellt ist.

Durch die berührungsempfindliche Oberfläche 4 des Touchscreens 2 wird nun eine Eingabegeste erfasst. Durch die berührungsempfindliche Oberfläche 4 ist anhand der Eingabegeste zumindest eine Position im Bereich der grafischen Bedienoberfläche 20 bestimmbar. Insbesondere werden dabei zwei Gestentypen unterschieden: Der erste Gestentyp umfasst bei dem Ausführungsbeispiel Tippgesten, wobei eine Berührung der berührungsempfindlichen Oberfläche 4 des Touchscreens 2 an einer bestimmten Position erfasst wird. Ferner kann dabei auch eine Zeitdauer der Berührung berücksichtigt werden. Der zweite Gestentyps umfasst bei dem Ausführungsbeispiel Wischgesten, wobei eine Startposition und eine Endposition einer Berührung erfasst werden. Ferner können dazwischen liegende Positionen, insbesondere einer Trajektorie der Bewegung von der Startposition zur Endposition, erfasst werden und es kann insbesondere ein zeitlicher Ablauf der Bewegung berücksichtigt werden.

Bei der Bedienoberfläche 20 sind zwei Bewegungsachsen R1, R2 vorgesehen, wobei sich die erste Bewegungsachse R1 relativ zur Bedienoberfläche 20 in senkrechter Richtung und die zweite Bewegungsachse R2 in horizontaler Richtung erstreckt. Anhand der Bewegungsachsen R1, R2 können Richtungen bestimmt und klassifiziert werden. Insbesondere können Richtungen anhand einer Wischgeste bestimmten werden. Zum Beispiel kann bestimmt werden, ob eine Wischgeste nach rechts oder links, nach oben oder unten ausgeführt wurde. Auf diese Weise können anhand der verschiedenen Wischgesten unterschiedliche Funktionalitäten implementiert werden.

Bei dem Ausführungsbeispiel ist vorgesehen, dass bei einer Wischgeste nach links oder rechts ein Umschalten zwischen verschiedenen Seiten beziehungsweise dargestellten Ausschnitten der grafischen Bedienoberfläche vorgenommen werden kann. Dabei kann insbesondere während der Erfassung der Wischgeste eine Bewegung der grafischen Bedienoberfläche dargestellt werden, beispielsweise ein Verschieben der in dem Anzeigebereich 20.2 dargestellten Inhalte entsprechend der Richtung der Wischgeste. Die Position des geänderten Ausschnitts wird entsprechend durch das Symbol 29 im Navigationsbereich 20.1 angezeigt.

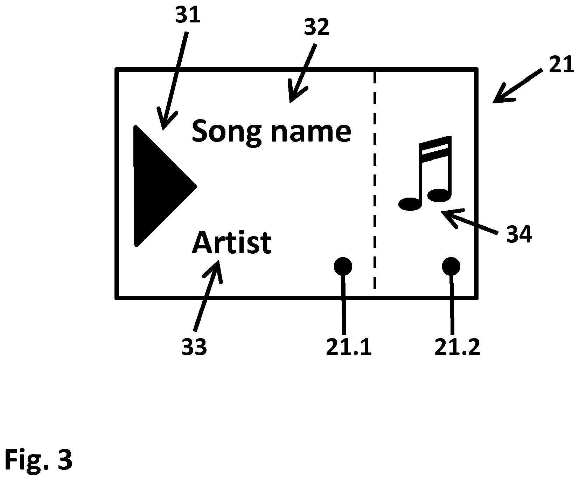

Ferner ist hier vorgesehen, dass weitere Gesten abhängig davon interpretiert werden, in welchem Bereich 21.1, 21.2, 22.1, 22.2 insbesondere der zweigeteilten Bedienobjekte 21, 22 sie erfasst werden. Ein solches Bedienobjekt 21 ist beispielhaft in Figur 3 gezeigt.

Das Bedienobjekt 21 ist einem Anwendungsprogramm zugeordnet, das eine Bedienung des Medienwiedergabesystems 7 ermöglicht. Es weist die beiden Bereiche 21.1 und 21.2 auf, die in der Figur durch eine gestrichelte Linie angedeutet sind. In dem ersten Bereich 21.1 wird ein Symbol 31 angezeigt, das ausgibt, ob aktuell eine Wiedergabe durchgeführt wird und/oder ob die Wiedergabe pausiert. Ferner werden durch Textfelder 32, 33 weitere Informationen über eine gespielte Mediendatei ausgegeben, in diesem Beispiel ein Titel und der Namen eines Interpreten eines Musikstücks. Die hier dargestellten Informationen werden insbesondere als Ausgabedaten des Anwendungsprogramms bereitgestellt, das die Wiedergabe von Medien im Fahrzeug 1 steuert. In dem zweiten Bereich 21.2 wird ein Symbol 34 angezeigt, das dem Anwendungsprogramm "Medienwiedergabe" zugeordnet ist. Die Darstellung in dem zweiten Bereich 21.2 erfolgt auf eine neutrale Weise, das heißt insbesondere unabhängig von der gerade gespielten Mediendatei. Dabei kann die Darstellung im zweiten Bereich 21.2 auf verschiedene Weise anders gebildet sein als im ersten Bereich 21.1, zum Beispiel durch eine veränderte Hintergrundfarbe, Strukturierung, Helligkeit oder andere grafische Effekte.

Wird nun eine Eingabegeste im Bereich des Bedienobjekts 21 erfasst, so wird danach unterschieden, welchem Gestentyp die Eingabegeste zuzuordnen ist und in welchem Bereich 21.1, 21.2 die Geste erfasst wurde. Wird in dem ersten Bereich 21.1 eine Eingabegeste des ersten Gestentyps, das heißt eine Tippgeste, erfasst, so wird zwischen dem Fortsetzen und Pausieren der Wiedergabe der aktuellen Mediendatei umgeschaltet. Entsprechend wird das im ersten Bereich 21.1 angezeigte Symbol 31 angepasst, um den Programmzustand für den Nutzer erfassbar auszugeben. Wird die Tippgeste dagegen im zweiten Bereich 21.2 erfasst, verändert sich die Darstellung der grafischen Bedienoberfläche 20 so, dass im Anwendungsbereich 20.2 eine Vollbilddarstellung des Anwendungsprogramms zum Bedienen des Medienwiedergabesystems 7 dargestellt wird. Insbesondere ist dabei vorgesehen, dass ausgehend von der Vollbilddarstellung durch eine weitere Bedienhandlung die Anzeige der grafischen Bedienoberfläche 20 zur Hauptanzeige umgeschaltet werden kann.

Wenn eine Eingabegeste des zweiten Gestentyps erfasst wird, das heißt hier eine Wischgeste von oben nach unten oder umgekehrt, so wird in dem Ausführungsbeispiel nicht unterschieden, in welchem der beiden Bereiche 21.1, 21.2 des Bedienobjekts 21 die Eingabegeste erfasst wurde. In weiteren Ausführungsbeispielen kann eine solche Unterscheidung vorgesehen sein.

In Abhängigkeit von der Richtung der Wischgeste nach oben oder nach unten wird die abzuspielende Mediendatei ausgewählt. Insbesondere liegen dabei verfügbare Mediendateien als Einträge einer Liste vor, wobei für jeden Eintrag der Liste ein voriger und ein nachfolgender Eintrag definiert ist. Zum Beispiel kann bei einer Wischbewegung nach oben eine Auswahl des nachfolgenden Listeneintrags erfolgen und umgekehrt bei einer Wischbewegung unten eine Auswahl des vorigen Listeneintrag. Ferner kann die Auswahl der anderen Ausführungsbeispielen auf andere Weise erfolgen.

### Bezugszeichenliste

- 1: Fahrzeug
- 2: Anzeigeeinheit; Touchscreen
- 3: Anzeigefläche
- 4: Eingabeeinheit; berührungsempfindliche Oberfläche
- 5: Grafikeinheit
- 6: Recheneinheit
- 7: Einrichtung; Medienwiedergabesystem
- 8: Steuereinheit
- 20: Grafische Bedienoberfläche
- 20.1: Navigationsbereich
- 20.2: Anwendungsbereich
- 21; 22; 23; 24: Bedienobjekt; Widget
- 21.1, 22.1: Erster Bereich (Bedienobjekt)
- 21.2; 22.2: Zweiter Bereich (Bedienobjekt)
- 25: Symbol "Ladezustand"
- 26: Symbol "Empfang"
- 27: Symbol "Uhrzeit"
- 28: Symbol "Suchen"
- 29: Symbol "Ansicht"
- 31: Symbol "Abspielen"
- 32: Textfeld "Titel"
- 33: Textfeld "Interpret"
- 34: Symbol "Medienwiedergabe"
- R1: Erste Bewegungsachse
- R2: Weitere Bewegungsachse

## Patentansprüche

1. Verfahren zum Bedienen einer Einrichtung (7), bei dem
eine grafische Bedienoberfläche (20) erzeugt und auf einer Anzeigefläche (3) angezeigt wird; wobei
die Bedienoberfläche (20) zumindest ein Bedienobjekt (21, 22, 23, 24) umfasst, das einem Anwendungsprogramm zum Steuern der Einrichtung (7) zugeordnet ist;
durch das Anwendungsprogramm Ausgabedaten erzeugt und im Bereich des zugeordneten Bedienobjekts (21, 22, 23, 24) angezeigt werden; wobei
das Anwendungsprogramm eine Funktion mit genau zwei aktivierbaren Programmzuständen aufweist, nämlich einem ersten und einem zweiten Programmzustand; wobei
der erste Programmzustand aktiviert ist; wobei
die Ausgabedaten anhand des aktivierten Programmzustands erzeugt werden; und
anhand der Bedienoberfläche (20) eine Eingabegeste erfasst wird; wobei
das Bedienobjekt (21, 22, 23, 24) einen ersten Bereich (21.1, 22.1) und einen zweiten Bereich (21.2, 22.2) aufweist; und
die Eingabegeste dem ersten (21.1, 22.1) oder zweiten Bereich (21.2, 22.2) zugeordnet wird; wobei,
wenn die Eingabegeste dem ersten Bereich (21.1, 22.1) zugeordnet worden ist und eine Geste eines ersten Gestentyps umfasst, der zweite Programmzustand aktiviert wird; und
das Anwendungsprogramm ferner zumindest zwei auswählbare Funktionsparameter aufweist; wobei ein erster Funktionsparameter ausgewählt ist und die Ausgabedaten ferner anhand des ausgewählten Funktionsparameters erzeugt werden;
**dadurch gekennzeichnet, dass,**
wenn die Eingabegeste dem zweiten Bereich zugeordnet worden ist und eine Geste des ersten Gestentyps umfasst, eine Vollbilddarstellung des Anwendungsprogramms erzeugt und angezeigt wird und,
wenn die Eingabegeste eine Geste eines zweiten Gestentyps umfasst, ein weiterer Funktionsparameter ausgewählt wird.

2. Verfahren gemäß Anspruch 1,
**dadurch gekennzeichnet, dass**
die Funktionsparameter geordnet in einer Liste gespeichert sind.

3. Verfahren gemäß Anspruch 2,
**dadurch gekennzeichnet, dass**
anhand des zweiten Gestentyps eine erste Richtung entlang einer ersten Bewegungsachse (R1) bestimmbar ist und
der weitere Funktionsparameter anhand der ersten Richtung ausgewählt wird.

4. Verfahren gemäß einem der vorhergehenden Ansprüche,
**dadurch gekennzeichnet, dass**
anhand des zweiten Gestentyps ferner eine weitere Richtung entlang einer weiteren Bewegungsachse (R2) senkrecht zu der ersten Bewegungsachse bestimmbar ist und,
wenn die Eingabegeste eine Richtung entlang der weiteren Bewegungsachse (R2) aufweist, eine Verschiebung der grafischen Bedienoberfläche (20) angezeigt wird.

5. Verfahren gemäß einem der vorhergehenden Ansprüche,
**dadurch gekennzeichnet, dass**
die Ausgabedaten des Anwendungsprogramms in dem ersten Bereich (21.1, 22.1) des Bedienobjekts (21, 22, 23, 24) angezeigt werden.

6. Verfahren gemäß einem der vorhergehenden Ansprüche,
**dadurch gekennzeichnet, dass**
die im zweiten Bereich (21.2, 22.2) des Bedienobjekts (21, 22, 23, 24) ausgegebenen Ausgabedaten unabhängig von dem aktivierten Programmzustand und dem ausgewählten Funktionsparameter sind.

7. Verfahren gemäß einem der vorhergehenden Ansprüche,
**dadurch gekennzeichnet, dass**
die grafische Bedienoberfläche (20) eine Hauptanzeige ist.

8. Verfahren gemäß einem der vorhergehenden Ansprüche,
**dadurch gekennzeichnet, dass**
der erste (21.1, 22.1) und zweite Bereich (21.2, 22.2) die gesamte Fläche des Bedienobjekts (21, 22, 23, 24) einnehmen.

9. Verfahren gemäß einem der vorhergehenden Ansprüche,
**dadurch gekennzeichnet, dass**
durch das Anwendungsprogramm eine Medienwiedergabe, eine Telefoneinrichtung, ein Navigationssystem und/oder ein Informationssystem gesteuert wird.

10. Bedienvorrichtung zum Bedienen einer Einrichtung (7) mit
einer Grafikeinheit (5), durch die Grafikdaten einer grafischen Bedienoberfläche (20) erzeugbar sind; wobei
einer Recheneinheit (6), durch die ein Anwendungsprogramm zum Steuern der Einrichtung (7) ausführbar ist und Ausgabedaten des Anwendungsprogramms erzeugbar sind;
einer Anzeigeeinheit (2) mit einer Anzeigefläche (3), auf der die Bedienoberfläche (20) anzeigbar ist; und
einer Eingabeeinheit (4) durch die eine Eingabegeste erfassbar ist; wobei
die Bedienoberfläche (20) zumindest ein Bedienobjekt (21, 22, 23, 24) umfasst, das dem Anwendungsprogramm zugeordnet ist, wobei die Ausgabedaten im Bereich des zugeordneten Bedienobjekts (21, 22, 23, 24) anzeigbar sind; wobei
das Anwendungsprogramm eine Funktion mit genau zwei aktivierbaren Programmzuständen aufweist, nämlich einem ersten und einem zweiten Programmzustand, wobei der erste Programmzustand aktiviert ist; wobei
die Ausgabedaten anhand des aktivierten Programmzustands erzeugbar sind; wobei
das Bedienobjekt (21, 22, 23, 24) einen ersten Bereich (21.1, 22.1) und einen zweiten Bereich (21.2, 22.2) aufweist; und
die Eingabegeste dem ersten (21.1, 22.1) oder zweiten Bereich (21.2, 22.2) zuordenbar ist; wobei,
wenn die Eingabegeste dem ersten Bereich (21.1, 22.1) zugeordnet worden ist und eine Geste eines ersten Gestentyps umfasst, der zweite Programmzustand aktivierbar ist; und,
das Anwendungsprogramm ferner zumindest zwei auswählbare Funktionsparameter aufweist; wobei ein erster Funktionsparameter ausgewählt ist und die Ausgabedaten ferner anhand des ausgewählten Funktionsparameters erzeugbar sind;
**dadurch gekennzeichnet, dass**
wenn die Eingabegeste dem zweiten Bereich (21.2, 22.2) zugeordnet worden ist und eine Geste des ersten Gestentyps umfasst, eine Vollbilddarstellung des Anwendungsprogramms erzeugbar und anzeigbar ist und,
wenn die Eingabegeste eine Geste eines zweiten Gestentyps umfasst, ein weiterer Funktionsparameter auswählbar ist.

11. Bedienvorrichtung gemäß Anspruch 10,
**dadurch gekennzeichnet, dass**
die Anzeigeeinheit (2) ein Mobilgerät umfasst.

12. Bedienvorrichtung gemäß Anspruch 10 oder 11,
**dadurch gekennzeichnet, dass**
das Anwendungsprogramm ferner zumindest zwei auswählbare Funktionsparameter aufweist; wobei
die Ausgabedaten ferner anhand des ausgewählten Funktionsparameters erzeugbar sind; wobei
ein erster Funktionsparameter ausgewählt ist; und,
wenn die Eingabegeste eine Geste eines zweiten Gestentyps umfasst, ein weiterer Funktionsparameter auswählbar ist.

13. Bedienvorrichtung gemäß einem der Ansprüche 10 bis 12,
**dadurch gekennzeichnet, dass**
die Einrichtung (7) ein Medienwiedergabesystem (7), eine Telefoneinrichtung, ein Navigationssystem oder ein Informationssystem umfasst.

14. Fahrzeug (1) mit einer Bedienvorrichtung gemäß einem der Ansprüche 10 bis 13.

## Claims

1. Method for operating a device (7), wherein
a graphical user interface (20) is generated and displayed on a display area (3); wherein
the user interface (20) comprises at least one operating object (21, 22, 23, 24) which is assigned to an application program for controlling the device (7) ;
by means of the application program, output data are generated and displayed in the region of the assigned operating object (21, 22, 23, 24); wherein the application program has a function having exactly two activatable program states, namely a first and a second program state; wherein
the first program state is activated; wherein
the output data are generated on the basis of the activated program state; and
an input gesture is detected on the basis of the user interface (20); wherein
the operating object (21, 22, 23, 24) has a first region (21.1, 22.1) and a second region (21.2, 22.2); and
the input gesture is assigned to the first region (21.1, 22.1) or to the second region (21.2, 22.2); wherein
if the input gesture has been assigned to the first region (21.1, 22.1) and comprises a gesture of a first gesture type, the second program state is activated; and
the application program furthermore has at least two selectable functional parameters; wherein a first functional parameter is selected and the output data are furthermore generated on the basis of the selected functional parameters;
**characterized in that**
if the input gesture has been assigned to the second region and comprises a gesture of the first gesture type, a full image representation of the application program is generated and displayed, and
if the input gesture comprises a gesture of a second gesture type, a further functional parameter is selected.

2. Method according to Claim 1,
**characterized in that**
the functional parameters are stored in an ordered manner in a list.

3. Method according to Claim 2,
**characterized in that**
on the basis of the second gesture type, a first direction along a first movement axis (R1) is determinable and
the further functional parameter is selected on the basis of the first direction.

4. Method according to any of the preceding claims,
**characterized in that**
on the basis of the second gesture type, a further direction along a further movement axis (R2) perpendicular to the first movement axis is furthermore determinable and
if the input gesture has a direction along the further movement axis (R2), a displacement of the graphical user interface (20) is displayed.

5. Method according to any of the preceding claims,
**characterized in that**
the output data of the application program are displayed in the first region (21.1, 22.1) of the operating object (21, 22, 23, 24).

6. Method according to any of the preceding claims,
**characterized in that**
the output data output in the second region (21.2, 22.2) of the operating object (21, 22, 23, 24) are independent of the activated program state and the selected functional parameter.

7. Method according to any of the preceding claims,
**characterized in that**
the graphical user interface (20) is a main display.

8. Method according to any of the preceding claims,
**characterized in that**
the first region (21.1, 22.1) and the second region (21.2, 22.2) occupy the entire area of the operating object (21, 22, 23, 24).

9. Method according to any of the preceding claims,
**characterized in that**
a media reproduction, a telephone device, a navigation system and/or an information system are/is controlled by the application program.

10. Operating apparatus for operating a device (7) comprising
a graphics unit (5), by which graphics data of a graphical user interface (20) are generatable; wherein
a computing unit (6), by which an application program for controlling the device (7) is executable and output data of the application program are generatable;
a display unit (2) having a display area (3), on which the user interface (20) is displayable; and an input unit (4), by which an input gesture is detectable; wherein
the user interface (20) comprises at least one operating object (21, 22, 23, 24) which is assigned to the application program, wherein the output data are displayable in the region of the assigned operating object (21, 22, 23, 24); wherein
the application program has a function having exactly two activatable program states, namely a first and a second program state, wherein the first program state is activated; wherein
the output data are generatable on the basis of the activated program state; wherein
the operating object (21, 22, 23, 24) has a first region (21.1, 22.1) and a second region (21.2, 22.2); and
the input gesture is assignable to the first region (21.1, 22.1) or to the second region (21.2, 22.2); wherein
if the input gesture has been assigned to the first region (21.1, 22.1) and comprises a gesture of a first gesture type, the second program state is activatable; and
the application program furthermore has at least two selectable functional parameters; wherein a first functional parameter is selected and the output data are furthermore generatable on the basis of the selected functional parameter;
**characterized in that**
if the input gesture has been assigned to the second region (21.2, 22.2) and comprises a gesture of the first gesture type, a full image representation of the application program is generatable and displayable, and
if the input gesture comprises a gesture of a second gesture type, a further functional parameter is selectable.

11. Operating apparatus according to Claim 10,
**characterized in that**
the display unit (2) comprises a mobile device.

12. Operating apparatus according to Claim 10 or 11
**characterized in that**
the application program furthermore has at least two selectable functional parameters; wherein
the output data are furthermore generatable on the basis of the selected functional parameter; wherein a first functional parameter is selected; and
if the input gesture comprises a gesture of a second gesture type, a further functional parameter is selectable.

13. Operating apparatus according to any of Claims 10 to 12,
**characterized in that**
the device (7) comprises a media reproduction system (7), a telephone device, a navigation system or an information system.

14. Vehicle (1) comprising an operating apparatus according to any of Claims 10 to 13.

## Revendications

1. Procédé de commande d'un équipement (7), dans lequel une interface utilisateur graphique (20) est générée et affichée sur une surface d'affichage (3) ; dans lequel l'interface utilisateur (20) comprend au moins un objet de commande (21, 22, 23, 24) qui est associé à un programme d'application destiné à commander l'appareil (7) ;
des données de sortie sont générées par le programme d'application et affichées dans la zone de l'objet de commande (21, 22, 23, 24) associé ; dans lequel le programme d'application présente une fonction possédant exactement deux états de programme activables, à savoir un premier et un second état de programme ; dans lequel le premier état de programme est activé ; dans lequel les données de sortie sont générées sur la base de l'état de programme activé ; et
un geste de saisie est détecté au moyen de l'interface utilisateur (20) ; dans lequel
l'objet de commande (21, 22, 23, 24) comporte une première zone (21.1, 22.1) et une seconde zone (21.2, 22.2) ; et
le geste de saisie est associé à la première (21.1, 22.1) ou à la seconde zone (21.2, 22.2) ; dans lequel lorsque le geste de saisie a été associé à la première zone (21.1, 22.1) et comprend un geste d'un premier type de geste, le second état de programme est activé ; et
le programme d'application présente également au moins deux paramètres de fonction sélectionnables ; dans lequel un premier paramètre de fonction est sélectionné et les données de sortie sont en outre générées sur la base du paramètre de fonction sélectionné ;
**caractérisé en ce que**,
lorsque le geste de saisie a été associé à la seconde zone et comprend un geste du premier type de geste, une représentation en plein écran du programme d'application est générée et affichée et,
lorsque le geste de saisie comprend un geste d'un second type de geste, un autre paramètre de fonction est sélectionné.

2. Procédé selon la revendication 1,
**caractérisé en ce que** les paramètres de fonction sont stockés de manière ordonnée dans une liste.

3. Procédé selon la revendication 2,
**caractérisé en ce qu'**une première direction suivant un premier axe de mouvement (R1) peut être déterminée sur la base du second type de geste et
l'autre paramètre de fonction est sélectionné sur la base de la première direction.

4. Procédé selon l'une des revendications précédentes,
**caractérisé en ce qu'**une autre direction suivant un autre axe de mouvement (R2) perpendiculaire au premier axe de mouvement peut être déterminée sur la base du second type de geste et,
lorsque le geste de saisie présente une direction suivant l'autre axe de mouvement (R2), un décalage de l'interface utilisateur graphique (20) est affiché.

5. Procédé selon l'une des revendications précédentes,
**caractérisé en ce que** les données de sortie du programme d'application sont affichées dans la première zone (21.1, 22.1) de l'objet de commande (21, 22, 23, 24).

6. Procédé selon l'une des revendications précédentes,
**caractérisé en ce que** les données de sortie délivrées dans la seconde zone (21.2, 22.2) de l'objet de commande (21, 22, 23, 24) sont indépendantes de l'état de programme activé et du paramètre de fonction sélectionné.

7. Procédé selon l'une des revendications précédentes,
**caractérisé en ce que** l'interface utilisateur graphique (20) est un affichage principal.

8. Procédé selon l'une des revendications précédentes,
**caractérisé en ce que** la première (21.1, 22.1) et la seconde zone (21.2, 22.2) occupent toute la surface de l'objet de commande (21, 22, 23, 24).

9. Procédé selon l'une des revendications précédentes,
**caractérisé en ce qu'**une reproduction multimédia, un dispositif téléphonique, un système de navigation et/ou un système d'information est commandée par le programme d'application.

10. Dispositif de commande destiné à commander un équipement (7) comportant une unité graphique (5) au moyen de laquelle les données graphiques d'une interface utilisateur graphique (20) peuvent être générées ;
une unité de calcul (6) au moyen de laquelle un programme d'application destiné à commander l'équipement (7) peut être exécuté et des données de sortie du programme d'application peuvent être générées ;
une unité d'affichage (2) comportant une surface d'affichage (3) sur laquelle l'interface utilisateur (20) peut être affichée ; et
une unité de saisie (4) au moyen de laquelle un geste de saisie peut être détecté ; dans lequel
l'interface utilisateur (20) comprend au moins un objet de commande (21, 22, 23, 24) qui est associé au programme d'application, dans lequel les données de sortie peuvent être affichées dans la zone de l'objet de commande (21, 22, 23, 24) associé ; dans lequel
le programme d'application présente une fonction possédant exactement deux états de programme activables, à savoir un premier et un second état de programme, dans lequel le premier état de programme est activé ; dans lequel les données de sortie peuvent être générées sur la base de l'état de programme activé ; dans lequel
l'objet de commande (21, 22, 23, 24) présente une première zone (21.1, 22.1) et une seconde zone (21.2, 22.2) ; et
le geste de saisie peut être associé à la première (21.1, 22.1) ou à la seconde zone (21.2, 22.2) ; dans lequel, lorsque le geste de saisie a été associé à la première zone (21.1, 22.1) et comprend un geste d'un premier type de geste, le second état de programme peut être activé ; et
le programme d'application comprend en outre au moins deux paramètres de fonction sélectionnables ; dans lequel un premier paramètre de fonction est sélectionné et les données de sortie peuvent en outre être générées sur la base du paramètre de fonction sélectionné ;
**caractérisé en ce que**,
lorsque le geste de saisie a été associé à la seconde zone (21.2, 22.2) et comprend un geste du premier type de geste, une représentation en plein écran du programme d'application peut être générée et affichée, et
lorsque le geste de saisie comprend un geste d'un second type de geste, un autre paramètre de fonction peut être sélectionné.

11. Dispositif de commande selon la revendication 10,
**caractérisé en ce que** l'unité d'affichage (2) comprend un appareil mobile.

12. Dispositif de commande selon la revendication 10 ou 11,
**caractérisé en ce que** le programme d'application comprend en outre au moins deux paramètres de fonction sélectionnables ; dans lequel
les données de sortie peuvent en outre être générées sur la base du paramètre de fonction sélectionné ; dans lequel un premier paramètre de fonction est sélectionné ; et, lorsque le geste de saisie comprend un geste d'un second type de geste, un autre paramètre de fonction peut être sélectionné.

13. Dispositif de commande selon l'une des revendications 10 à 12,
**caractérisé en ce que** l'équipement (7) comprend un système de reproduction multimédia (7), un appareil téléphonique, un système de navigation ou un système d'information.

14. Véhicule (1) comportant un dispositif de commande selon l'une des revendications 10 à 13.
